# EUROPÄISCHE PATENTSCHRIFT

(11) **EP 3 652 419 B1**
(45) Veröffentlichungstag und Bekanntmachung des Hinweises auf die Patenterteilung: **30.12.2020**
(21) Anmeldenummer: 18739535.5
(22) Anmeldetag: 10.07.2018
(51) Int. Cl.: F01M 13/04

(54) **ZYLINDERKOPFÖLABSCHEIDER FÜR EINEN VERBRENNUNGSMOTOR (STRÖMUNGSGEFÜHRTER ÖLABSCHEIDER)**
CYLINDER HEAD OIL SEPARATOR FOR AN INTERNAL COMBUSTION ENGINE (FLOW-CONTROLLED OIL SEPARATOR)
SÉPARATEUR D'HUILE DE CULASSE CONÇU POUR UN MOTEUR À COMBUSTION INTERNE (SÉPARATEUR D'HUILE À CIRCULATION PAR ÉCOULEMENT)

(30) Priorität: 12.07.2017 DE 102017115682
(43) Veröffentlichungstag der Anmeldung: 20.05.2020
(73) Patentinhaber: Montaplast GmbH, 51590 Morsbach (DE)
(72) Erfinder: POUILLON, René, 85391 Allershausen (DE); HEINZ, Michael, 57290 Neunkirchen (DE)
(74) Vertreter: Lippert Stachow Patentanwälte Rechtsanwälte
(86) Internationale Anmeldenummer: PCT/EP2018/068651
(87) Internationale Veröffentlichungsnummer: WO 2019/011910

(56) Entgegenhaltungen:
- EP-A1- 2 146 061
- DE-A1-102016 107 328
- DE-U1-202014 003 301
- US-A1- 2015 059 718

## Beschreibung

Die Erfindung betrifft eine Vorrichtung zur Entölung eines aus einem Kurbelgehäuse eines Verbrennungsmotors abgeführten Blowby-Gases (Luft-Öl-Aerosol), häufig auch als Ölabscheider zur Kurbelgehäuseentlüftung bezeichnet. Das Blowby-Gas besteht typischerweise aus Öldampf, Abgas, unverbranntem Kraftstoff und /oder Wasserdampf. Die Kurbelgehäuseentlüftung soll einen leichten Unterdruck im Kurbelgehäuse aufrechterhalten, um so z.B. für einen optimalen Motorlauf und für die Einhaltung geltender Umweltschutzvorschriften zu sorgen. Das in der Abscheidevorrichtung getrennte Öl wird zurück in den Ölkreislauf geführt. Die verbleibende Mischung des Blowby-Gases kann über die Lufteinlassseite zur Verbrennung dem Motor zugeführt werden.

### Stand der der Technik

Solche Ölabscheider sind aus der Praxis des Motorenbaus lange bekannt. Diese umfassen üblicherweise ein Membran-Ventil, auch als Druckregelventil oder abgekürzt als PCV bezeichnet, zur Regelung eines leichten Unterdrucks im Kurbelgehäuse, um ein ungewünschtes Ausströmen von mit Öl beladener Luft in die Umwelt zu unterbinden. Das Blowby-Gas (Luft-Öl-Aerosol) wird über eine Zuführungsleitung dem Ölabscheider zugeführt, in diesem von dem Öl getrennt, wonach das abgetrennte Öl über eine Rückführungsleitung zurück in die Ölwanne oder in das Kurbelgehäuse läuft. Die von dem Öl gereinigte Luft, teilweise auch als "Reinluft" bezeichnet, kann dann der Ansaugluft des Verbrennungsmotors wieder zugeführt werden.

Derartige Vorrichtungen zur passiven Ölabscheidung verwenden das Prinzip der Trägheitsabscheidung, bei denen das Öl aufgrund seiner Massenträgheit an mindestens einer Prallwand des Ölabscheiders aus dem Aerosolstrom getrennt wird, indem das schwerere Öl absinkt und die leichtere Luft umgelenkt wird. Derartige Ölabscheider werden häufig auch als "Trägheitsabscheider" bezeichnet.

Trägheitsabscheider können zum Beispiel als Zyklon- oder als Prallabscheider ausgebildet sein, wie dieser z.B. aus der DE 10 2008 044 857 A1 der Anmelderin bekannt ist. Ein solcher Prallabscheider umfasst ein Gehäuse mit einer Einlassöffnung zum Einströmen des Luft-Öl-Aerosols.

Im Speziellen betrifft die Erfindung einen in einem Zylinderkopf eines Verbrennungsmotors anordenbarer Zylinderkopfölabscheider. Der Verbrennungsmotor nimmt in einem Zylinder mindestens einen Kolben relativbeweglich auf, der mit einem Kolbenunterende eine in einem Kurbelwellengehäuse des Verbrennungsmotors drehbar gelagerte Kurbelwelle antreibt. Unterhalb der Kurbelwelle ist eine Ölwanne zum Sammeln eines Öls vorgesehen. Der Zylinderkopfölabscheider weist eine erste Öffnung zur Zuführung eines über eine Zuführungsleitung aus dem Kurbelwellengehäuse zugeführten Luft-Öl-Aerosols, eine fluidisch mit dieser verbundene Ölabscheidevorrichtung zur Trennung des Öls aus dem Luft-Öl-Aerosol sowie eine sich an die Ölabscheidevorrichtung und fluidisch mit dieser verbundene zweite Öffnung auf, die mit einer Rückführungsleitung zur Rückführung einer vom Öl gereinigten Luft fluidisch verbindbar bzw. verbunden ist.

Die DE 10 2016 107 328 A1 offenbart eine gattungsgemäße Vorrichtung.

Weiterer Stand der Technik ist bekannt aus DE 20 2014 003 301 U1, EP 2 146 061 A1 sowie US 2015/059 718 A1, DE 10 2014 011 355 A1, EP 2 532 850 B1, DE 10 2010 004 910 A1, DE 198 20 384 A1, DE 39 10 559 A1 sowie DE 38 32 013 C2.

### Nachteile am Stand der Technik

Obgleich derartige Zylinderkopfölabscheider bereits eine sehr zufriedenstellende Trennung des in dem Aerosol enthaltenen Öls von der Luft realisieren, sind diese kompliziert aufgebaut und weisen eine große Anzahl von Teilen auf.

Bei bestimmten Motoren ist eine zusätzliche Belüftung des Kurbelgehäuses notwendig, was mit bestehenden Trägheitsabscheidern (z.B. Labyrinthabscheider) auf Grund der Konstruktion nicht möglich ist, so dass ein weiteres Bauteil benötigt wird.

### Technisches Problem (Aufgabe)

Ausgehend von diesem Stand der Technik befasst sich die Erfindung mit dem technischen Problem, diese Nachteile zumindest teilweise zu vermeiden und insbesondere einen Ölabscheider ausgebildet für den Einbau in einen Zylinderkopf eines Verbrennungsmotors vorzusehen, der einfacher aufgebaut ist und eine verbesserte Funktionalität aufweist und mit dem nach Bedarf insbesondere auch eine Belüftung des Kurbelgehäuses zu verwirklichen ist.

### Erfindung

Erfindungsgemäß wird diese Aufgabe bei einem Zylinderkopfölabscheider der eingangs genannten Art bereits durch die kennzeichnenden Merkmale des Anspruchs 1 gelöst; vorteilhafte, aber nicht zwingende Weiterentwicklungen sind in den Unteransprüchen wiedergegeben.

In der einfachsten Ausführungsform wird diese Aufgabe somit bereits dadurch gelöst, dass die Ölabscheidevorrichtung einen Strömungskanal umfasst, der so ausgebildet ist, dass ein an der ersten Öffnung in einer Abscheiderichtung (SR1) eintretendes Luft-Öl-Aerosol bis zu einem Luftaustritt des von dem Öl gereinigten Luft an der zweiten Öffnung einen längeren Strömungsweg durchströmen muss als in ein an der zweiten Öffnung einströmendes und in einer der Abscheiderichtung entgegengesetzten Belüftungsrichtung (SR2) zur ersten Öffnung strömendes Fluid durchströmt. Der Strömungskanal ist in Abscheiderichtung (SR1) geometrisch ausgebildet, um eine strömungsgeführte Ölabscheidung zu realisieren.

Der Strömungskanal der Ölabscheidevorrichtung in dem Zylinderkopfölabscheider, also der die erste Öffnung mit der zweiten Öffnung strömungstechnisch verbindende Strömungskanal ist so gestaltet, dass in Strömungsrichtung vom Aerosol-Eintritt bis zum Luftaustritt, welche im Sinne der Erfindung als "Abscheiderichtung" bezeichnet wird, ein längerer Strömungsweg durchströmt werden muss, dass der Strömungskanal in Abscheiderichtung zumindest abschnittsweise geometrisch zur Realisierung einer Ölabscheidung ausgebildet ist, und dass der Strömungskanal gleichzeitig so ausgebildet ist, dass in einer zur Abscheiderichtung entgegengesetzten Strömungsrichtung, welche erfindungsgemäß als "Belüftungsrichtung" bezeichnet wird, ein eintretendes Fluid, insbesondere Luft, nur einen kürzeren Strömungsweg durchströmt.

Der Strömungskanal ist dabei so ausgebildet, dass in der "Belüftungsrichtung" eine möglichst geringe Ablenkung des Luftstroms auftritt, also eine möglichst laminare Strömung gewährleistet ist, wohingegen dieser in der entgegengesetzten "Abscheiderichtung" so ausgestaltet ist, dass das Luft-Öl-Aerosol einen deutlich längeren Strömungsweg durchströmen muss, um nur mittels Trägheitsabscheidung die gewünschte Abscheideleistung zu realisieren. Erfindungsgemäß sind alle Abschnitte des Strömungskanals sowohl in Abscheiderichtung als auch in Belüftungsrichtung strömungstechnisch (fluidisch) miteinander verbunden.

Die Ölabscheidung wird somit alleine durch die Ausgestaltung der Ölabscheidevorrichtung verwirklicht, so dass der Ölabscheider völlig ohne bewegliche Teile, in Form von Federn, Ventilen auskommt und auf einem sehr reduzierten Bauraum verbaut bzw. integriert werden kann. Zudem ist der Ölabscheider wegen der nicht vorhandenen Dichtungen wenig fehleranfällig, so dass dieser eine erheblich höhere Lebensdauer als bestehende Ölabscheider mit beweglichen Teilen aufweist.

Mit dem Zylinderkopfölabscheider kann somit mittels einer Fluidströmung, insbesondere einer Luftströmung, in der Belüftungsrichtung erstmalig mit demselben Ölabscheider auch bedarfsgerecht eine Belüftung des Kurbelgehäuses bzw. anderer Motorteile realisiert werden. Da die Luft in Belüftungsrichtung möglichst linear entlang eines zentralen Hauptkanals strömt, tritt ein deutlich geringerer Druckabfall als in der Abscheiderichtung auf.

Bevorzugt ist der Zylinderkopfölabscheider ausgebildet, dass in der Abscheiderichtung (SR1) vom Eintritt des Luft-Öl-Aerosols an der ersten Öffnung bis zum Luftaustritt an der zweiten Öffnung ein größerer Druckabfall auftritt als beim Durchströmen eines Fluids, insbesondere Luft, in der zur Abscheiderichtung entgegensetzt strömenden Belüftungsrichtung (SR2) durch dieselben Öffnungen.

Vorzugsweise ist der Strömungskanal so ausgebildet, dass bei steigendem Volumenstrom der Druck in der Abscheiderichtung stärker abnimmt als in der Belüftungsrichtung.

Der nach dem Tesla-Prinzip ausgebildete Strömungskanal des Zylinderkopfölabscheiders umfasst bevorzugt einen sich von der ersten zur zweiten Öffnung erstreckenden, vorzugsweise im Wesentlichen zentralen Hauptkanal, von dem dann an mehreren Abzweigstellen fluidisch mit diesem Hauptkanal verbundene Seitenkanäle abzweigen und nach einer Umlenkung in Abscheiderichtung stromabwärts wieder in den Hauptkanal münden. Vorzugsweise verläuft an jeder Abzweigstelle eines Seitenkanals vom Hauptkanal der Übergang in einen Abführungsabschnitt des Seitenkanals möglichst linear bzw. gerade, wohingegen der Hauptkanal an der Abzweigstelle gleichzeitig in Abscheiderichtung etwas seitlich abzweigt und dann ein umgelenkter Rückführungsabschnitt des Seitenkanals stromabwärts von der Abzweigstelle wieder in den Hauptkanal mündet. Auf diese Wiese können mehrere Seitenkanäle an dem Hauptkanal vorgesehen sein, insbesondere in Abscheiderichtung alternierend an entgegengesetzten Seiten des Hauptkanals.

Der Strömungswiderstand und somit die Abscheideleistung in Abscheiderichtung kann über die Ausbildung der Geometrie und/oder Anzahl der Seitenkanäle bedarfsgerecht angepasst werden. Beispielsweise können Seitenkanäle in Abhängigkeit von der jeweiligen Motorleistung unterschiedliche Längen, Krümmungsradien und Abmessungen aufweisen. Insbesondere werden die Breite, die Höhe und der Querschnitt auf den jeweils erforderlichen Luftmassenstrom abgestimmt.

Als zweckmäßig hat sich die Ausbildung von 5 bis 10 Seitenkanälen erwiesen.

Besonders bevorzugt weist der Strömungskanal in der Abscheiderichtung eine 1,5 bis 5 Mal so große Länge wie in der Belüftungsrichtung auf. Es liegt jedoch auch im Rahmen der Erfindung, dass die Veränderung der Abscheideleistung über die Veränderung der Kanalgeometrie sowie über Kombinationen der Länge und der Kanalgeometrie erfolgt.

Bevorzugte Ausführungsformen sehen vor, dass jeder Seitenkanal einen sich im Wesentlichen linear erstreckenden Abführungsabschnitt, einen an dessen Ende ausgebildeten, insbesondere bogenförmig ausgebildeten Umlenkabschnitt, der bevorzugt eine Umlenkung des Luft-Öl-Aerosols um 180 Grad realisiert, sowie einen sich an den Umlenkabschnitt anschließenden Rückführungsabschnitt umfasst, der seinerseits in den Hauptkanal mündet, und sich vorzugsweise parallel zu dem Abführungsabschnitt erstreckt.

Zur Reduzierung des erforderlichen Bauraums in einem Gehäuse zur Aufnahme des Ölabscheiders ist es zweckmäßig, dass die Seitenkanäle in Abscheiderichtung zur Mittellängsachse geneigt sind. Bevorzugt umfasst das Gehäuse ein mit einem Gehäuseunterteil verbindbares Gehäuseoberteil bzw. einen Gehäusedeckel. Vorzugsweise ist der Strömungskanal an dem Gehäuseunterteil ausgebildet, welches zudem bevorzugt plattenförmig bzw. flächig mit einer Grundplatte ausgebildet sein kann und der Strömungskanal als von der dieser Grundplatte ab- bzw. hochragende Stege bzw. Wände ausgebildet sind.

Bevorzugte Ausführungsformen umfassen bei mindestens einem Seitenkanal Mittel zur Erhöhung der Abscheidungsleistung. Wichtig ist, dass diese Maßnahmen zur Erhöhung der Abscheideleistung in Abscheiderichtung (SR1) keinen oder nur geringen Einfluss auf den Strömungsverlauf in Belüftungsrichtung (SR2) entlang des zentralen Hauptkanals ausüben. Insofern sind diese Mittel zur Erhöhung der Abscheideleistung vorzugsweise in oder an den Seitenkanälen vorgesehen.

Diese Mittel zur Erhöhung der Abscheideleistung können z.B. Verengungen, die sich vorzugsweise quer zum Seitenkanal erstrecken, oder Rippen umfassen, die sich innerhalb des Seitenkanals erstrecken. Diese Rippen können z.B. als Abscheiderippe ausgebildet sein, die zumindest einen Abschnitt aufweisen, welcher sich quer zur Längserstreckungsrichtung des Seitenkanals erstreckt. Auch eine gerippte oder gewellte Ausbildung beider oder einzelner Seitenwände des Seitenkanals sind zur Erhöhung der Abscheideleistung möglich. Ausführungsformen umfassen zur Steigerung der Abscheideleistung in dem Seitenkanal, vorzugsweise im Bereich oder angrenzend an den Umlenkabschnitt, eine sich im Wesentlichen quer zur Strömungsrichtung erstreckende Prallwand, welche ausgebildet ist, eine besonders starke bzw. scharfe Umlenkung des Volumenstroms zu realisieren, womit das in dem Aerosol mitgeführte Öl aufgrund der Massenträgheit an dieser Prallwand noch besser abgeschieden wird.

Bevorzugt ist die Prallwand zumindest abschnittsweise linear ausgebildet.

Ausführungsformen umfassen, dass die Prallwand mit einem angrenzenden Abschnitt des Seitenkanals, insbesondere einer Außenwand einen spitzen Winkel von ca. 70 bis 85 Grad einschließt, um somit eine besonders scharfe Umlenkung und damit verbesserte Abscheideleistung zu erzielen.

Eine Steigerung der Abscheideleistung lässt sich auch realisieren, indem die Wände der Seitenkanäle zumindest Abschnittsweise und gänzlich eine vergrößerte Oberfläche aufweisen, z.B. Rippen, Wellen oder dergleichen, wodurch bei gleicher Länge des Seitenkanals eine größere Oberfläche realisiert wird.

Eine Steigerung der Abscheideleistung im Strömungskanal kann auch durch Vorsehen von einer die Strömungsgeschwindigkeit steigernden Vorrichtung erzielt werden. Als besonders vorteilhaft hat sich die Anordnung dieser Strömungsgeschwindigkeit steigernden Vorrichtung am Ende des Hauptkanals in Abscheiderichtung erwiesen. Beispielsweise kann diese die Strömungsgeschwindigkeit steigernde Vorrichtung als eine Venturi-Düse ausgebildet sein, wobei das Ende der Ölabscheidung des Strömungskanals oder eines Strömungskanal-Abschnitts als Saugrohr in die Venturi-Düse mündet.

Zweckmäßigerweise ist der Strömungskanal dieser Ausführungsform mit der Venturi-Düse zweiarmig gestaltet, umfasst also zwei Strömungskanal-Abschnitte, die in die Venturi-Düse münden. Jeder dieser Strömungskanal-Abschnitte kann erfindungsgemäß ausgebildet sein, also mindestens einen Hauptkanal und mindestens einem Seitenkanal umfassen. Dabei kann vorgesehen sein, dass ein Strömungskanal-Abschnitt nur in Abscheiderichtung SR1 durchströmt wird und der zweite Strömungskanal-Abschnitt nur in Belüftungsrichtung SR1, so dass der Strömungskanal mit der Venturi-Düse somit 3 Öffnungen zum Ein- und Austritt der Medien aufweist.

Die verschiedenen Mittel zur Erhöhung der Abscheideleistung können zur Anpassung der Abscheideleistung an die jeweiligen Motoreigenschaften/Anwendungsfälle beliebig miteinander kombiniert werden, also entweder nur in einem Seitenkanal, in einigen oder in allen Seitenkanälen.

Die Seitenkanäle können unterschiedlich oder einheitlich, also von gleicher Ausgestaltung aufgebaut sein, wobei sich die einheitliche Ausbildung als besonders zweckmäßig erwiesen hat.

Der Zylinderkopfölabscheider umfasst bevorzugt mindestens einen Ölablauf, bevorzugt im Bereich bzw. unterhalb des mindestens einen Umlenkabschnitts des Seitenkanals. Es können aber auch mehrere Ölabläufe in dem Gehäuse des Zylinderkopfölabscheiders integriert sein, z.B. am tiefsten Punkt des Gehäuses. Alternativ kann das Gehäuse zu einer Seite geneigt ausgebildet oder geneigt montiert sein, wobei der mindestens eine Ölablauf dann am tiefsten Punkt des Gehäuses vorgesehen ist.

Eine besonders bauraum-optimierte bzw. anforderungsbedingte Ausführungsform sieht vor, dass sich die Eingangs- und die Ausgangsöffnung des Zylinderkopfölabscheiders an demselben Bogen bzw. Halbbogen von der Eingangs- zur Ausgangsöffnung erstreckt. Bei der Integration in ein Gehäuse sind somit die Öffnungen zur Luft- bzw. Luft-Aerosol-Zuführung an einer Seite des Zylinderkopfölabscheiders gelegen.

Der Zylinderkopfölabscheider kann ausgebildet sein, um einen optimierten Kurbelraumdruck bzw. Kurbelraumunterdruck im negativen Bereich um die - 2 mbar in dem Kurbelgehäuse zu verwirklichen. Bevorzugt ist der Zylinderkopfölabscheider so gestaltet, dass der Zylinderkopfölabscheider von der ersten Öffnung bis zur zweiten Öffnung in Abscheiderichtung eine definierte Druckreduzierung von insbesondere - 2 mbar realisiert.

Vorzugsweise sind die Seitenkanäle entlang einer Längsachse in Abscheiderichtung alternierend versetzt zueinander an dem Hauptkanal ausgebildet.

Zur Reduzierung des erforderlichen Bauraums ist es dabei zweckmäßig, dass die Seitenkanäle mit der Längsachse des Zylinderkopfölabscheiders einen Winkel einschließen, insbesondere einen spitzen Winkel von etwa 45 Grad.

Vorzugsweise sind die mehreren in Abscheiderichtung hintereinander geschalteten Seitenkanäle gleich ausgebildet. Es liegt jedoch im Rahmen der Erfindung, die einzelnen, zuvor beschriebenen Maßnahmen zur Erhöhung der Abscheideleistung in den Seitenkanälen beliebig miteinander zu kombinieren.

In der folgenden ausführlichen Beschreibung wird auf die beigefügten Zeichnungen Bezug genommen, die Teil dieser Erfindungsbeschreibung bilden und in denen zur Veranschaulichung spezifische Ausführungsformen gezeigt sind, mit denen die Erfindung ausgeübt werden kann. In dieser Hinsicht wird Richtungsterminologie wie etwa "oben", "unten", "vorne", "hinten", "vorderes", "hinteres", usw. in Bezug auf die Orientierungen der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist.

Bezugszeichenlinien sind Linien, die das Bezugszeichen mit dem betreffenden Teil verbinden. Ein Pfeil hingegen, der kein Teil berührt, bezieht sich auf eine gesamte Einheit, auf die er gerichtet ist. Die Figuren sind im Übrigen nicht unbedingt maßstäblich. Zur Veranschaulichung von Details können möglichweise bestimmte Bereiche übertrieben groß dargestellt sein. Darüber hinaus können die Zeichnungen plakativ vereinfacht sein und enthalten nicht jedes bei der praktischen Ausführung gegebenenfalls vorhandene Detail. Die Begriffe "oben" und "unten" beziehen sich auf die Darstellung in den Figuren. Es zeigen:
- Fig. 1:: ein schematisches, frontales Schnittbild eines Verbrennungsmotors mit einem erfindungsgemäßen Zylinderkopfölabscheider;
- Figur 2:: eine schematische Draufsicht einer ersten Ausführungsform eines Strömungskanals des Zylinderkopfölabscheiders;
- Figur 3:: eine schematische Draufsicht einer zweiten Ausführungsform eines Strömungskanals des Zylinderkopfölabscheiders;
- Figur 4:: eine schematische Draufsicht einer dritten Ausführungsform eines Strömungskanals des Zylinderkopfölabscheiders;
- Figur 5:: eine schematische Draufsicht einer vierten Ausführungsform eines Strömungskanals des Zylinderkopfölabscheiders;
- Figur 6:: eine schematische Draufsicht einer fünften Ausführungsform eines Strömungskanals des Zylinderkopfölabscheiders;
- Figur 7:: eine schematische Draufsicht einer sechsten Ausführungsform eines Strömungskanals des Zylinderkopfölabscheiders bei Durchströmung in Abscheiderichtung;
- Figur 8:: die Ausführungsform gemäß Figur 7 bei Durchströmung in Belüftungsrichtung;
- Figur 9:: eine schematische Draufsicht einer siebten Ausführungsform eines Strömungskanals des Zylinderkopfölabscheiders;
- Figur 10: eine Draufsicht einer Zylinderkopfhaube mit integriertem Zylinderkopfölabscheider;
- Figur 11: eine isometrische Frontansicht der Zylinderkopfhaube bei entferntem Deckel; und
- Figur 12: einen vergrößerten Querschnitt entlang der Linie A-A gemäß Figur 9 der Zylinderkopfhaube gemäß Figur 10.

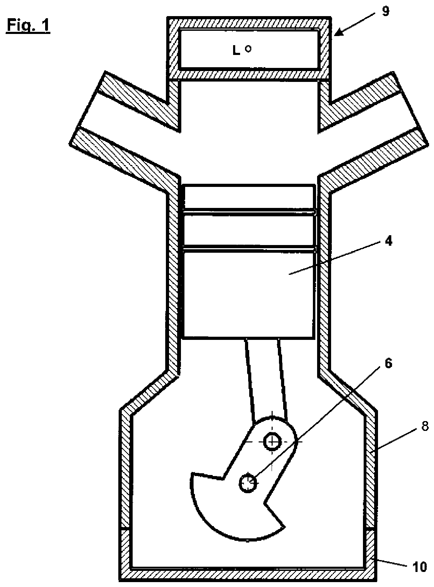

Gemäß der schematisch dargestellten Figur 1 besteht der Verbrennungsmotor im Wesentlichen aus einem Motorblock 2 mit mehreren darin relativ beweglichen Kolben 4 mit einem jeweiligen Kolbenoberende und Kolbenunterende. Die Kolben 4 sind drehbeweglich über Kolbenstangen in bekannter Weise mit einer Kurbelwelle 6 verbunden und treiben diese an. Unterhalb dieser in einem Kurbelwellengehäuse 8 aufgenommenen Kurbelwelle 6 ist eine Ölwanne 10 zum Auffangen von Öl angeordnet. Innerhalb eines als Kunststoffspritzgussteils ausgebildeten Zylinderkopfdeckels 9 ist unter anderem der Zylinderkopfölabscheider integriert, welcher ein Gehäuse umfasst, das einen darin ausgebildeten Strömungskanal 12, 14, 16, 18, 20, 22 aufweist.

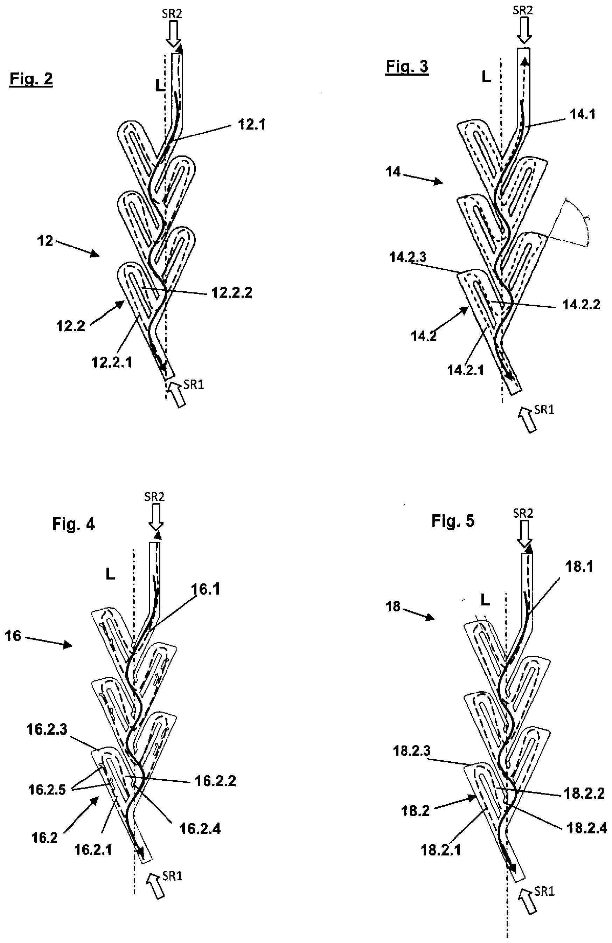

Verschiedene Ausgestaltungen dieser in den Zylinderkopfölabscheider integrierten und jeweils als Teslaventile aufgebauten Strömungskanäle 12, 14, 16, 18, 20, 22 sind in den Figuren 2 bis 8 jeweils in schematischen Draufsichten dargestellt, welche sich jeweils in der Betrachtungsrichtung von Figur 1 in dem Zylinderkopfölabscheider entlang dessen Längsachse L erstrecken.

Jeder Strömungskanal 12, 14, 16, 18, 20, 22 fasst einen zentralen und sich von einer ersten Öffnung (Eingangsöffnung) bis zu einer zweiten Öffnung (Ausgangsöffnung) der Ölabscheidevorrichtung erstreckenden Hauptkanal 12.1, 14.1, 16.1, 18.1, 20.1, 22.1 von dem mehrere fluidisch mit diesem verbundene Seitenkanäle 12.2, 14.2, 16.2, 18.2, 20.2, 22.2, abzweigen, von denen jeweils nur einer in Bezug jeder Figur näher beschrieben ist.

Jeder dieser Strömungskanäle 12, 14, 16, 18, 20, 22, ist so ausgebildet, dass ein an einer jeweiligen ersten Öffnung entlang eines jeweiligen Pfeils SR1 eintretender Volumenstrom (jeweils dargestellt als gestrichelte Linie) die mehreren hintereinander geschalteten von dem jeweiligen mittigen Hauptkanal 12.1, 14.1, 16.1, 18.1, 20.1, 22.1 in einem spitzen Winkel zur jeweiligen Längsachse L abgehenden Seitenkanäle 12.2, 14.2, 16.2, 18.2, 20.2, 22.2 von dem Luft-Öl-Aerosol bis zur zweiten Öffnung durchströmt werden müssen, womit in diesen Seitenkanälen 12.2, 14.2, 16.2, 18.2, 20.2, 22.2 durch Zwangsumlenkung die Trägheitsabscheidung durch Trennen des Öls aus Luft-Öl-Aerosol verwirklicht wird.

In der umgekehrten Strömungsrichtung, also in Belüftungsrichtung entlang eines nunmehr an der jeweiligen zweiten Öffnung entlang des jeweiligen Pfeils SR2 eintretenden Volumenstroms (jeweils dargestellt als durchgezogene, schwarze Linie) wird hingegen bis zur jeweiligen ersten Öffnung nur der jeweilige, im Wesentlichen mittig gelegene Hauptkanal 12.1, 14.1, 16.1, 18.1, 20.1, 22.1 durchströmt. Dabei durchströmt das Fluid, vorzugsweise Luft, einen deutlich kürzeren Strömungsweg und es tritt ein geringerer Druckverlust als in der entgegengesetzten Abscheiderichtung auf.

Bei der ersten Ausführungsform des Strömungskanals 12 gemäß Figur 2 ist die Verbindung der Seitenkanäle jeweils bogenförmig mit einer Umlenkung um 180 Grad ausgebildet. Jeder Strömungskanal 12 umfasst einen mit dem Hauptkanal 12.1 verbundenen, linear ausgebildeten Abführungsabschnitt 12.2.1, an dessen Ende eine Umlenkung um 180 Grad erfolgt und der sich dann erstreckt in einen wiederum linear ausgebildeten Abführungsabschnitt 12.2.2, der seinerseits wieder in den zentralen Hauptkanal 12.1 mündet, und zwar parallel erstreckend zu dem Abführungsabschnitt 12.2.1. Auf diese Weise sind in Abscheiderichtung seitlich alternierend an dem Hauptkanal 12.1 insgesamt 5 hintereinander ausgebildete Seitenkanäle 12.2 vorgesehen, die bauraumoptimiert jeweils in einem spitzen Neigungswinkel zur Längsachse geneigt sind. Vorzugsweise beträgt dieser Neigungswinkel etwa 45 Grad.

Auch bei der zweiten Ausführungsform gemäß Figur 3 sind in Abscheiderichtung SR1 insgesamt 5 hintereinandergeschaltete Seitenkanäle 14.2 vorgesehen, jedoch ist hier die Ausgestaltung der Umlenkung anders. Diese sind nicht ausschließlich harmonisch bogenförmig ausgebildet, sondern weisen wieder einen von dem Hauptkanal 14.1 abgehenden linearen Abführungsabschnitt 14.2.1 auf, welcher an seinem Ende übergeht in eine sich quer zur Längsachse des Abführungsabschnitts 14.2.1 erstreckende und zunächst gerade ausgebildete Prallwand 14.2.3 aufweist, die einen spitzen Winkel mit der Außenwand des Abführungsabschnitts 14.2.1 einschließt und dann über einen harmonischen Bogenabschnitt in den Rückführungsabschnitt 14.2.2 übergeht, der seinerseits parallel versetzt zum Abführungsabschnitt 14.2.1 in den zentralen Hauptkanal 14.1 mündet.

Die dritte Ausführungsform gemäß Figur 4 entspricht derjenigen gemäß Figur 3 mit dem Unterschied, dass in dem jeweiligen Abführungsabschnitt 16.2.1 eines Seitenkanals 16.2 Abscheiderippen 16.2.5 vorgesehen sind, welche eine Störgeometrie darstellen und sich im Wesentlichen in der Kanallängsrichtung erstreckende Längsschenkel mit einem quer zu diesem Längsschenkel erstreckenden Winkelfortsatz am Ende aufweisen. Neben der Ausgestaltung solcher Abscheiderippen 16.2.5 in dem Abführungsabschnitt 16.2.1 können diese auch zusätzlich oder alternativ in dem Rückführungsabschnitt 16.2.2 eines jeden Seitenkanals 12.2, 14.2, 16.2, 18.2, 20.2, 22.2 ausgebildet sein.

Auch die dritte Ausführungsform gemäß Figur 4 und die vierte Ausführungsform gemäß Figur 5 umfassen an den Umlenkungen der Seitenkanäle 16.2 und 18.2 jeweils Prallwände 16.2.3 und 18.2.3 zur Erhöhung der Abscheidungsleistung.

Ferner weisen diese die in den Figuren 4 und 5 dargestellten Rückführungsabschnitte 16.2.2. und 18.2.2. ebenfalls zur Erhöhung der Abscheideleistung an ihren Enden beim Übergang in den Hauptkanal 16.1, 18.1 jeweils eine nach innen ragende Verengung 16.2.4, 18.2.4 auf, die sich etwa in um die Hälfte in den Querschnitt des Rückführungsabschnitt 16.2.2., 18.2.2 erstrecken und diesen Querschnitt etwa um ein Drittel reduzieren.

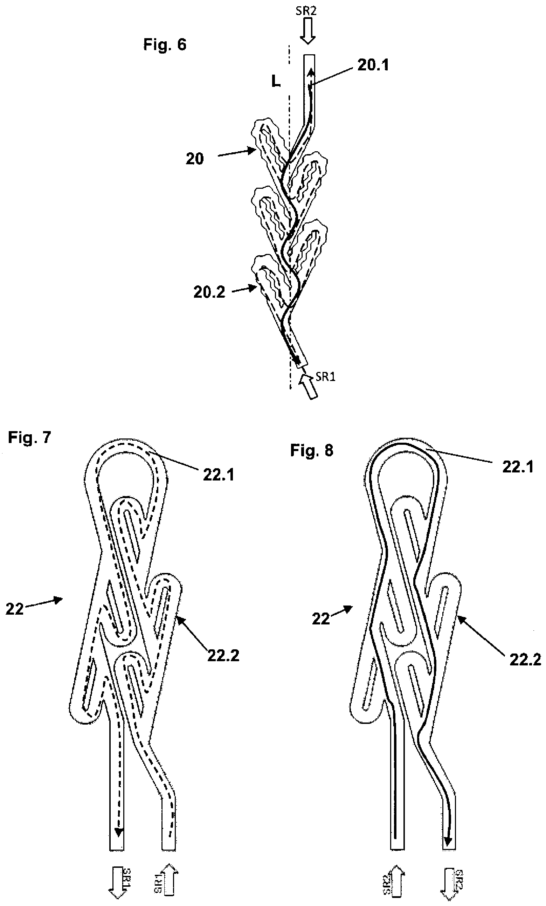

Die fünfte Ausführungsform gemäß Figur 6 entspricht im Wesentlichen der in Figur 2 dargestellten ersten Ausführungsform, unterscheidet sich von dieser jedoch dadurch, dass die Außen- und Innenwände der Seitenkanäle 20.2 wellenförmig ausgebildet sind zur Erhöhung der Abscheideleistung.

Die Ausführungsform gemäß den Figuren 7 und 8 zeigt eine bauraumoptimierte Ausführungsform, bei welcher die Eingangsseite bzw. die erste Öffnung des Strömungskanals 22 des Zylinderkopfölabscheiders und die Ausgangsseite bzw. die zweite Öffnung an einem gemeinsamen, hier unteren Ende angeordnet sind, der zentrale Hauptkanal 22.1 also nicht in Längserstreckungsrichtung im Wesentlichen linear ausgebildet ist, sondern grundsätzlich bogenförmig um 180 Grad gebogen mit Winkelabschnitten ausgebildet ist und sich von diesem sodann die insgesamt 5 Seitenkanäle 22.2 abführen.

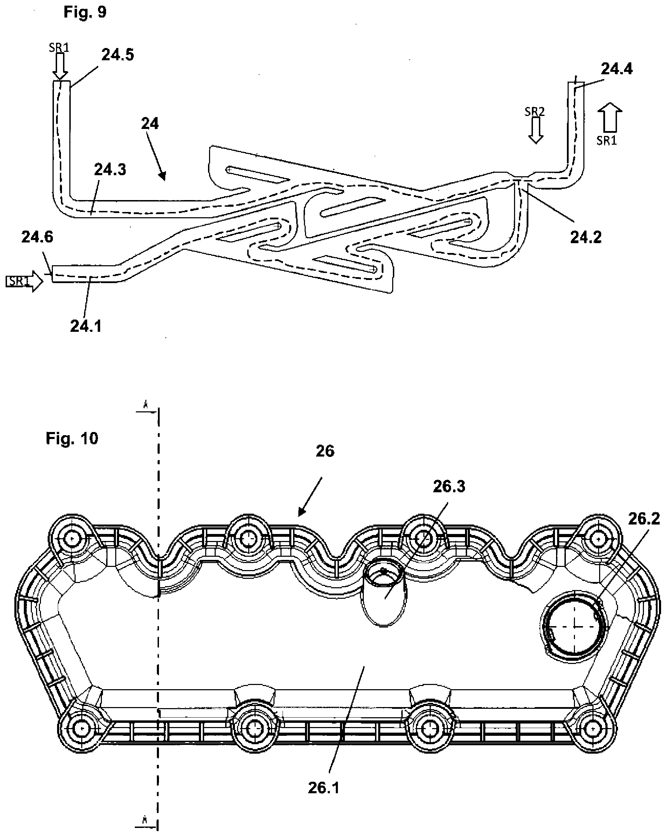

Die in Figur 9 dargestellte siebte Ausführungsform des Zylinderkopfölabscheiders umfasst einen Strömungskanal 24, der zwei Strömungskanal-Abschnitte aufweist, von denen ein erster Strömungskanal-Abschnitt 24.1 axial entlang der Hauptstromrichtung in eine Venturi-Düse 24.2 mündet und der zweite Strömungskanal-Abschnitt 24.3 radial seitlich das Abnahmerohr der Venturi-Düse 24.2 bildet. Die Venturi-Düse 24.2 ist also in Abscheiderichtung SR1 am Ende der Strömungskanal-Abschnitte 24.1, 24.3 angeordnet. Diese Venturi-Düse 24.2 erhöht die Druckdifferenz zwischen Venturi-Düse 24.1 und dem ersten Strömungskanal-Abschnitt 24.1 und erhöht damit die Abscheideleistung in Abscheiderichtung SR1.

Die Venturi-Düse 24.1 kann entweder alleine oder in Kombination mit anderen Maßnahmen zur Erhöhung der Abscheideleistung vorgesehen sein.

Im Gegensatz zu den bisherigen Ausführungsformen umfasst dieser Strömungskanal 24 insgesamt drei Öffnungen, nämlich eine erste, rechtsseitig gelegene erste Öffnung 24.4 stromabwärts von der Venturi-Düse 24.2 und auf der linken Seite zwei getrennte Öffnungen 24.5, 24.6, wobei sich an die zweite Öffnung 24.5 der erste Strömungskanal-Abschnitt 24.1 anschließt, welcher einen Hauptkanal mit drei Seitenkanälen aufweist und welcher radial als Abnahmerohr in die Venturi-Düse 24.2 mündet. Der zweite Strömungskanal-Abschnitt 24.3 umfasst einen Hauptkanal mit zwei Seitenkanälen und mündet axial in Hauptstromrichtung in die Venturi-Düse 24.2, so dass dieser den Steuerungskanal für die Venturi-Düse 24.2 bildet. Bei diesem zweiten Strömungskanal-Abschnitts 24.3 fungieren die Seitenkanäle als Rückschlagventil, um eine Strömung eingehend in die erste Öffnung 24.4 durch die Venturi-Düse 24.2 zu unterbinden. Sofern auf eine Belüftung in Belüftungsrichtung SR2 gewünscht wird, kann auf die Seitenkanäle in dem zweiten Strömungskanal-Abschnitt 24.3 verzichtet werden.

Die Öffnung 24.5 bildet die Eintrittsöffnung für das die Venturi-Düse 24.2 antreibenden Fluid, also axial in Venturi-Düse 24.2 einströmt und durch die Öffnung 24.4 austritt.

Die Öffnung 24.6 zu Beginn des ersten Strömungskanal-Abschnitts 24.1 bildet hingegen den getrennten Aerosol-Eingang, durch welchen die das beladene Luft-Öl-Aerosol in Abscheiderichtung SR1 eintritt und wobei die gereinigte Luft über die erste Öffnung 24.4 austritt.

Die Figuren 10 bis 12 zeigen sodann Ausbildungen eines erfindungsgemäß ausgebildeten Zylinderkopfdeckels 26 mit integriertem Ölabscheider.

In der Figur 10 ist eine Draufsicht dieses Zylinderkopfdeckels 26 dargestellt, der über mehrere randseitig ausgebildete Befestigungsösen, die auf jeder Seite entlang der Längserstreckungsrichtung des Zylinderkopfdeckels 26 ausgebildet sind, auf der Oberseite eines Motorblocks befestigbar ist. Der Zylinderkopfdeckel 26 umfasst einen domförmigen oder haubenartig gewölbten Deckel 26.1, in den von oben an einem Ende vertikal ein Öleinfüllstutzen 26.2 und etwas schräg seitlich davon in einem Winkel zur Seite eine Luftaustrittsöffnung 26.3 durch welche die gereinigte Luft austritt.

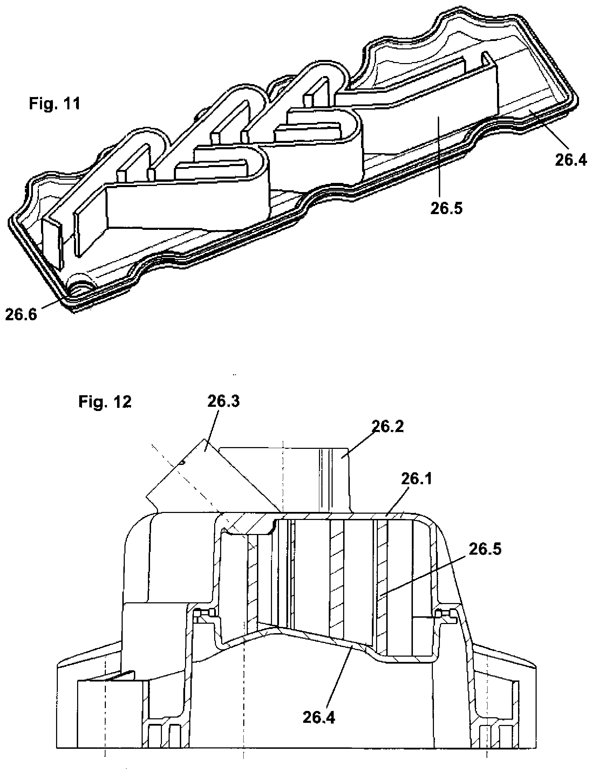

Der Deckel 26.1 ist gemäß des vergrößerten Querschnitts in Figur 12 in Einbaulage umfänglich randseitig mit einer plattenartigen Schale 26.4 verbunden, wobei die beiden Bauteile beispielsweise miteinander verschweißt oder verklebt sein können. Auf einer Oberseite der plattenartigen Schale 26.4 sind Wände 26.5 zur Bildung des Strömungskanals einstückig angeformt. Der Strömungskanal wird somit im zusammengesetzten Zustand des Zylinderkopfdeckels 26 umfassend den Deckel 26.1 und die Schale 26.4 zwischen diesen beiden Teilen ausgebildet, wobei der Deckel 26.1 den Strömungskanal oberseitig abdeckt und verschließt.

In der Figur 11 ist am rechtsseitig vorderen Ende eine Aerosol-Eintrittsöffnung 26.6 vorgesehen, durch welche also die mit Öl beladene Luft eintritt, durch den Strömungskanal strömt und sodann durch die Luftaustrittsöffnung 26.3 am Ende des Strömungskanals austritt.

Der Fachmann versteht, dass die Erfindung nicht auf 5 Seitenkanäle beschränkt ist, sondern beliebig viele Seitenkanäle angepasst an den jeweiligen Anwendungsfall vorgesehen werden können.

Es versteht sich für den Fachmann ebenfalls, dass die Ausgestaltung gemäß Figur 7 mit weiteren Vorrichtungen zur Erhöhung des Strömungswegs in Abscheiderichtung in einzelnen oder allen Seitenkanälen kombiniert werden kann, z.B. mit den Verengungen 16.2.4, 18.2.4 gemäß der dritten Ausführungsform gemäß Figur 4 oder der vierten Ausführungsform gemäß Figur 5, die Abscheiderippen 16.2.5 gemäß der dritten Ausführungsform in Figur 4 oder der wellenförmigen Wände der Seitenkanäle gemäß fünfter Ausführungsform gemäß Figur 6. Das Konzept der Integration eines Tesla-Strömungsventils wurde in der Einbausituation in einen Zylinderkopf beschrieben. Für den Fachmann ist jedoch verständlich, dass dieses Konzept erfindungsgemäß an anderen Stellen in den Motor integriert sein kann.

### Bezugszeichenliste

- 2: Motorblock
- 4: Kolben
- 6: Kurbelwelle
- 8: Kurbelwellengehäuse
- 9: Zylinderkopfdeckel
- 10: Ölwanne
- 12: Strömungskanal
- 12.1: Hauptkanal
- 12.2: Seitenkanal
- 12.2.1: Abführungsabschnitt
- 12.2.2: Rückführungsabschnitt
- 14: Strömungskanal
- 14.1: Hauptkanal
- 14.2: Seitenkanal
- 14.2.1: Abführungsabschnitt
- 14.2.2: Rückführungsabschnitt
- 14.2.3: Prallwand
- 16: Strömungskanal
- 16.1: Hauptkanal
- 16.2: Seitenkanal
- 16.2.1: Abführungsabschnitt
- 16.2.2: Rückführungsabschnitt
- 16.2.3: Prallwand
- 16.2.4: Verengung
- 16.2.5: Abscheiderippe
- 18: Strömungskanal
- 18.1: Hauptkanal
- 18.2: Seitenkanal
- 18.2.1: Abführungsabschnitt
- 18.2.2: Rückführungsabschnitt
- 18.2.3: Prallwand
- 18.2.4: Verengung
- 20: Strömungskanal
- 20.1: Hauptkanal
- 20.2: Seitenkanal
- 20.2.1: Abführungsabschnitt
- 20.2.2.: Rückführungsabschnitt
- 22: Strömungskanal
- 22.1: Hauptkanal
- 22.2: Seitenkanal
- L: Längsachse des Zylinderkopfdeckels
- 24: Strömungskanal24.1erster Strömungskanal-Abschnitt
- 24.2: Venturi-Düse
- 24.3: zweiter Strömungskanal-Abschnitt
- 24.4: erste Öffnung
- 24.5, 24.6: Öffnung
- 26: Zylinderkopfdeckel
- 26.1: Deckel
- 26.2: Öleinfüllstutzen
- 26.3: Luftaustrittöffnung
- 26.4: Schale
- 26.5: Wand
- 26.6: Aerosol-Eintrittsöffnung

## Patentansprüche

1. Zylinderkopfölabscheider für einen Zylinderkopf eines Verbrennungsmotors, wobei der Verbrennungsmotor in einem Motorblock mindestens einen Kolben relativbeweglich aufnimmt, der mit einem Kolbenunterende eine in einem Kurbelwellengehäuse (8) drehbar gelagerte Kurbelwelle (6) antreibt, wobei eine unterhalb der Kurbelwelle (6) angeordnete Ölwanne (10) zum Sammeln eines Öls vorgesehen ist, wobei der Zylinderkopfölabscheider eine erste Öffnung zur Zuführung eines über eine Zuführungsleitung aus dem Kurbelwellengehäuse (8) zugeführten Luft-Öl-Aerosols, eine fluidisch mit dieser verbundene Ölabscheidevorrichtung zur Trennung des Öls aus dem Luft-Öl-Aerosol sowie eine fluidisch verbundene und sich an die Ölabscheidevorrichtung anschließende zweite Öffnung aufweist, welche mit einer Rückführungsleitung zur Rückführung einer vom Öl gereinigten Luft strömungstechnisch verbindbar ist, **DADURCH GEKENNZEICHNET, DASS** die Ölabscheidevorrichtung einen Strömungskanal (12, 14, 16, 18, 20, 22) umfasst, der so ausgebildet ist, dass ein an der ersten Öffnung in einer Abscheiderichtung (SR1) eintretendes Luft-Öl-Aerosol bis zu einem Luftaustritt der von dem Öl gereinigten Luft an der zweiten Öffnung einen längeren Strömungsweg durchströmt als ein an der zweiten Öffnung einströmendes und in einer der Abscheiderichtung entgegengesetzten Belüftungsrichtung (SR2) zur ersten Öffnung strömendes Fluid und dass der Strömungskanal (12, 14, 16, 18, 20, 22) in Abscheiderichtung (SR1) geometrisch so ausgebildet ist, um eine strömungsgeführte Ölabscheidung zu realisieren.

2. Zylinderkopfölabscheider nach Anspruch 1, **DADURCH GEKENNZEICHNET, DASS** der Strömungskanal ausgebildet ist, um in der Abscheiderichtung (SR1) einen größeren Druckabfall als in der Belüftungsrichtung (SR2) zu realisieren.

3. Zylinderkopfölabscheider nach Anspruch 1 oder 2, **DADURCH GEKENNZEICHNET, DASS** der Strömungskanal (12, 14, 16, 18, 20, 22) einen vorzugsweise zentral angeordneten Hauptkanal (12.1, 14.1, 16.1, 18.1, 20.1) umfasst, und dass von dem Hauptkanal (12.1, 14.1, 16.1, 18.1, 20.1) mehrere Seitenkanäle (12.2, 14.2, 16.2, 18.2, 20.2) fluidisch verbunden mit diesem abgehen.

4. Zylinderkopfölabscheider nach Anspruch 3 , **DADURCH GEKENNZEICHNET, DASS** die Seitenkanäle (12.2, 14.2, 16.2, 18.2, 20.2) jeweils einen von dem Hauptkanal (12.1, 14.1, 16.1, 18.1, 20.1) abgehenden Abführungsabschnitt (12.2.1, 14.2.1, 16.2.1, 18.2.1, 20.2.1), einen sich an diesen anschließenden und zur Ölabscheidung ausgebildeten Bogenabschnitt sowie einen an diesen und mit dem Hauptkanal (12.1, 14.1, 16.1, 18.1, 20.1) fluidisch verbundenen Rückführungsabschnitt (12.2.2, 14.2.2, 16.2.2, 18.2.2, 20.2.2) umfassen.

5. Zylinderkopfölabscheider nach Anspruch 4, **DADURCH GEKENNZEICHNET, DASS** der Abführungsabschnitt (12.2.1, 14.2.1, 16.2.1, 18.2.1, 20.2.1) und/oder der Rückführungsabschnitt (12.2.2, 14.2.2, 16.2.2, 18.2.2, 20.2.2) im Wesentlichen linear ausgebildet sind.

6. Zylinderkopfölabscheider nach Anspruch 5, **DADURCH GEKENNZEICHNET, DASS** sich mindestens ein Abführungsabschnitt (12.2.1, 14.2.1, 16.2.1, 18.2.1, 20.2.1) und mindestens ein Rückführungsabschnitt (12.2.2, 14.2.2, 16.2.2, 18.2.2, 20.2.2) im Wesentlichen parallel zueinander erstrecken.

7. Zylinderkopfölabscheider nach einem der Ansprüche 4 bis 6, **DADURCH GEKENNZEICHNET, DASS** mindestens ein Seitenkanal (12.2, 14.2, 16.2, 18.2, 20.2) Mittel zur Erhöhung der Abscheidungsleistung aufweist.

8. Zylinderkopfölabscheider nach Anspruch 7, **DADURCH GEKENNZEICHNET, DASS** die Mittel zur Erhöhung der Abscheideleistung mindestens eine Verengung (16.2.4, 18.2.4) umfassen.

9. Zylinderkopfölabscheider nach einem der Ansprüche 7 oder 8, **DADURCH GEKENNZEICHNET, DASS** die Mittel zur Erhöhung der Abscheideleistung an mindestens einem Seitenkanal (14.2, 16.2, 18.2) mindestens einen Bogenabschnitt mit einer Prallwand (14.2.3, 16.2.3, 18.2.3) und/oder mindestens eine gewellte Wand und/oder mindestens eine Abscheiderippe (16.2.5) und/oder mindestens eine Verengung (16.2.4, 18.2.4) umfassen.

10. Zylinderkopfölabscheider nach einem der Ansprüche 3 bis 9, **DADURCH GEKENNZEICHNET, DASS** die Seitenkanäle (12.2, 14.2, 16.2, 18.2, 20.2) in Abscheiderichtung geneigt sind und mit einer Längsachse (L) in Abscheiderichtung einen spitzen Winkel einschließen.

11. Zylinderkopfölabscheider nach einem der Ansprüche 2 bis 10, **DADURCH GEKENNZEICHNET, DASS** der Strömungskanal eine Düse umfasst.

12. Zylinderkopfölabscheider nach Anspruch 11, **DADURCH GEKENNZEICHNET, DASS** die Düse als Venturi-Düse (24.2) ausgebildet ist und dass zumindest ein Strömungskanal-Abschnitt (24.1) das Saugrohr der Venturi-Düse (24.2) bildet.

13. Zylinderkopfölabscheider nach einem der Ansprüche 1 bis 12, **DADURCH GEKENNZEICHNET, DASS** dieser in ein Gehäuse integriert ist, das vorzugsweise als Kunststoffspritzgussteil ausgebildet ist.

14. Zylinderkopfölabscheider nach Anspruch 13, **DADURCH GEKENNZEICHNET, DASS** dieser in einem Zylinderkopfdeckel (9) integriert ist.

15. Verbrennungsmotor mit einem Motorblock, der mindestens einen Kolben (4) relativbeweglich aufnimmt, der eine unter diesem in einem Kurbelwellengehäuse (8) drehbar gelagerte Kurbelwelle (6) antreibt, wobei eine unterhalb der Kurbelwelle (6) angeordnete Ölwanne (10) zum Sammeln eines Öls vorgesehen ist, und wobei oberhalb des mindestens einen Kolbens (4) in einem Zylinderkopf ein Zylinderkopfölabscheider vorgesehen ist, **DADURCH GEKENNZEICHNET, DASS** der Zylinderkopfölabscheider nach einem der vorhergehenden Ansprüche ausgebildet ist.

## Claims

1. A cylinder head oil separator for a cylinder head of an internal combustion engine, wherein the internal combustion engine accommodates at least one piston in an engine block so as to be relatively movable, said piston driving with a piston lower end a crankshaft (6) rotatably supported in a crankshaft housing (8), wherein an oil pan (10) arranged below the crankshaft (6) is provided for collecting an oil, wherein the cylinder head oil separator comprises a first opening for the supply of an air-oil aerosol supplied from the crankshaft housing (8) via a supply line, an oil separation device fluidically connected thereto for separating the oil from the air-oil aerosol, and comprising a second opening fluidically connected and adjoining the oil separation device, which can be fluidically connected to a return line for returning an air cleaned of oil, **CHARACTERISED IN THAT** the oil separating device comprises a flow channel (12, 14, 16, 18, 20, 22) which is designed in such a way **in that** an air-oil aerosol entering at the first opening in a separation direction (SR1) flows through a longer flow path up to an air outlet of the air cleaned of the oil at the second opening than a fluid flowing in at the second opening and flowing to the first opening in a ventilation direction (SR2) opposite to the separation direction, and **in that** the flow channel (12, 14, 16, 18, 20, 22) in the separation direction (SR1) is geometrically designed to realize flow-guided oil separation.

2. Cylinder head oil separator according to claim 1, **CHARACTERIZED IN THAT** the flow channel is designed to realize a greater pressure drop in the separation direction (SR1) than in the ventilation direction (SR2).

3. Cylinder head oil separator according to claim 1 or 2, **CHARACTERISED IN THAT** the flow channel (12, 14, 16, 18, 20, 22) comprises a preferably centrally arranged main channel (12.1, 14.1, 16.1, 18.1, 20.1), and that from the main channel (12.1, 14.1, 16.1, 18.1, 20.1) several side channels (12.2, 14.2, 16.2, 18.2, 20.2) exit fluidically connected thereto.

4. Cylinder head oil separator according to claim 3 , **CHARACTERIZED IN THAT** the side channels (12.2, 14.2, 16.2, 18.2, 20.2) each have a discharge section (12.2.1, 14.1, 16.1, 18.1, 20.1) extending from the main channel (12.1, 14.2.1, 16.2.1, 18.2.1, 20.2).1), a curved section adjoining the latter and designed for oil separation, and a return section (12.2.2, 14.1, 16.1, 18.1, 20.1) fluidically connected to the latter and to the main channel (12.1, 14.1, 16.1, 18.1, 20.1).

5. Cylinder head oil separator according to claim 4, **CHARACTERIZED IN THAT** the discharge section (12.2.1, 14.2.1, 16.2.1, 18.2.1, 20.2.1) and/or the return section (12.2.2, 14.2.2, 16.2.2, 18.2.2, 20.2.2) are designed to be substantially linear.

6. Cylinder head oil separator according to claim 5, **CHARACTERIZED IN THAT** at least one discharge section (12.2.1, 14.2.1, 16.2.1, 18.2.1, 20.2.1) and at least one return section (12.2.2, 14.2.2, 16.2.2, 18.2.2, 20.2.2) extend substantially parallel to each other.

7. Cylinder head oil separator according to one of claims 4 to 6, **CHARACTERIZED IN THAT** at least one side channel (12.2, 14.2, 16.2, 18.2, 20.2) has means for increasing the separation efficiency.

8. Cylinder head oil separator according to claim 7, **CHARACTERISED IN THAT** the means for increasing the separation efficiency comprise at least one constriction (16.2.4, 18.2.4).

9. Cylinder head oil separator according to one of claims 7 or 8, **CHARACTERIZED IN THAT** the means for increasing the separation efficiency at at least one side channel (14.2, 16.2, 18.2) comprise at least one curved section with an impact wall (14.2.3, 16.2.3, 18.2.3) and/or at least one corrugated wall and/or at least one separator rib (16.2.5) and/or at least one constriction (16.2.4, 18.2.4).

10. Cylinder head oil separator according to one of claims 3 to 9, **CHARACTERISED IN THAT** the side channels (12.2, 14.2, 16.2, 18.2, 20.2) are inclined in the separation direction and form an acute angle with a longitudinal axis (L) in the separation direction.

11. Cylinder head oil separator according to any one of claims 2 to 10, **CHARACTERIZED IN THAT** the flow channel comprises a nozzle.

12. Cylinder head oil separator according to claim 11, **CHARACTERIZED IN THAT** the nozzle is designed as a Venturi nozzle (24.2) and that at least one flow channel section (24.1) forms the suction pipe of the Venturi nozzle (24.2).

13. Cylinder head oil separator according to any one of claims 1 to 12, **CHARACTERIZED IN THAT** it is integrated into a housing, preferably a plastic injection molded part.

14. Cylinder head oil separator according to claim 13, **CHARACTERIZED IN THAT** it is integrated in a cylinder head cover (9).

15. Internal combustion engine with an engine block which receives at least one piston (4) in a relatively movable manner, which piston drives a crankshaft (6) rotatably mounted underneath it in a crankshaft housing (8), wherein an oil pan (10) arranged below the crankshaft (6) is provided for collecting an oil, and wherein a cylinder head oil separator is provided above the at least one piston (4) in a cylinder head, **CHARACTERISED IN THAT** the cylinder head oil separator is designed according to one of the preceding claims.

## Revendications

1. Séparateur d'huile de culasse pour une culasse d'un moteur à combustion interne, dans lequel le moteur à combustion interne reçoit au moins un piston dans un bloc moteur de manière à être relativement mobile, ledit piston entraînant avec une extrémité inférieure de piston un vilebrequin (6) supporté de manière rotative dans un carter de vilebrequin (8), dans lequel un carter d'huile (10) disposé sous le vilebrequin (6) est prévu pour recueillir une huile, dans lequel le séparateur d'huile de la culasse présente une première ouverture pour l'alimentation d'un aérosol air-huile alimenté à partir du carter de vilebrequin (8) par une conduite d'alimentation, un dispositif de séparation de l'huile relié fluidiquement à celui-ci pour séparer l'huile de l'aérosol air-huile et une deuxième ouverture reliée fluidiquement et attenante au dispositif de séparation de l'huile, qui peut être raccordé en termes d'écoulement à une conduite de retour pour le retour d'un air purifié de l'huile, **CARACTÉRISÉ EN CE QUE** le dispositif de séparation de l'huile comprend un canal d'écoulement (12, 14, 16, 18, 20, 22) qui est formé de telle manière qu'un aérosol air-huile entrant par la première ouverture dans un dispositif de séparation (SR1) s'écoule par un chemin d'écoulement plus long jusqu'à une sortie de l'air nettoyé de l'huile à la deuxième ouverture qu'un fluide entrant par la deuxième ouverture et s'écoulant vers la première ouverture dans un sens de ventilation (SR2) opposé au dispositif de séparation, et **en ce que** le canal d'écoulement (12, 14, 16, 18, 20, 22) dans le dispositif de séparation (SR1) est conçu géométriquement de telle sorte que la séparation d'huile guidée par le flux est réalisée.

2. Séparateur d'huile de culasse selon la revendication 1, **CARACTÉRISÉ EN CE QUE** le canal d'écoulement est conçu pour réaliser une chute de pression plus importante dans le dispositif de séparation (SR1) que dans le dispositif d'aération (SR2).

3. Séparateur d'huile de culasse selon la revendication 1 ou 2, **CARACTÉRISÉ EN CE QUE** le canal d'écoulement (12, 14, 16, 18, 20, 22) comprend un canal principal (12.1, 14.1, 16.1, 18.1, 20.1) disposé de préférence au centre et **en ce que** plusieurs canaux latéraux (12.2, 14.2, 16.2, 18.2, 20.2), en liaison fluidique avec ceux-ci, partent du canal principal (12.1, 14.1, 16.1, 18.1, 20.1).

4. Séparateur d'huile de culasse selon la revendication 3, **CARACTÉRISÉ EN CE QUE** les canaux latéraux (12.2, 14.2, 16.2, 18.2, 20.2) ont chacun une section de décharge (12.2.1, 14.2.1, 16.2.1, 18.2.1, 20.1) s'étendant à partir du canal principalement (12.1, 14.1, 16.1, 18.1, 20.1), une section en arc adjacente à cette dernière et conçue pour la séparation d'huile et une section de retour (12.2.2, 14.2.2, 16.2.2, 18.2.2, 20.2.2) reliée fluidiquement au canal principal (12.1, 14.1, 16.1, 18.1, 20.1).

5. Séparateur d'huile de culasse selon la revendication 4, **CARACTÉRISÉ EN CE QUE** la section de décharge (12.2.1, 14.2.1, 16.2.1, 18.2.1, 20.2.1) et/ou la section de retour (12.2.2, 14.2.2, 16.2.2, 18.2.2, 20.2.2) sont formées de façon sensiblement linéaire.

6. Séparateur d'huile de culasse selon la revendication 5, **CARACTÉRISÉ EN CE QU'**au moins une section de décharge (12.2.1, 14.2.1, 16.2.1, 18.2.1, 20.2.1) et au moins une section de retour (12.2.2, 14.2.2, 16.2.2, 18.2.2, 20.2.2) s'étendent sensiblement parallèlement l'une à l'autre.

7. Séparateur d'huile de culasse selon l'une revendications 4 à 6, **CARACTÉRISÉ EN CE QU'**au moins un canal latéral (12.2, 14.2, 16.2, 18.2, 20.2) comprend de moyens pour augmenter l'efficacité de séparation.

8. Séparateur d'huile de culasse selon la revendication 1, **CARACTÉRISÉ EN CE QUE** les moyens pour augmenter l'efficacité de séparation comprennent au moins un étranglement (16.2.4, 18.2.4).

9. Séparateur d'huile de culasse selon l'une des revendications 7 ou 8, **CARACTÉRISÉ EN CE QUE** les moyens pour augmenter l'efficacité de séparation au niveau d'au moins un canal latéral (14.2, 16.2, 18.2) comprennent au moins une section en arc avec une paroi d'impact (14.2.3, 16.2.3, 18.2.3) et/ou au moins une paroi ondulée et/ou au moins une nervure séparatrice (16.2.5) et/ou au moins un rétrécissement (16.2.4, 18.2.4).

10. Séparateur d'huile de culasse selon l'une des revendications 3 à 9, **CARACTÉRISÉ EN CE QUE** les canaux latéraux (12.2, 14.2, 16.2, 18.2, 20.2) sont inclinés dans la direction de séparation et forment un angle aigu avec un axe longitudinal (L) dans la direction de séparation.

11. Séparateur d'huile de culasse selon l'une des revendications 2 à 10, **CARACTÉRISÉ EN CE QUE** le canal d'écoulement comprend une buse.

12. Séparateur d'huile de culasse selon la revendication 11, **CARACTÉRISÉ EN CE QUE** la buse est conçue comme une buse Venturi (24.2) et qu'au moins une section de canal d'écoulement (24.1) forme le tuyau d'aspiration de la buse Venturi (24.2).

13. Séparateur d'huile de culasse selon l'une des revendications 1 à 12, **CARACTÉRISÉ EN CE QU'**il est intégré dans un boîtier qui est de préférence conçu comme une pièce moulée par injection de plastique.

14. Séparateur d'huile de culasse selon la revendication 13, **CARACTÉRISÉ EN CE QU'**il est intégré dans un couvre-culasse (9).

15. Moteur à combustion interne avec un bloc moteur qui reçoit au moins un piston (4) de manière relativement mobile, lequel piston entraîne un vilebrequin (6) monté à rotation en dessous de celui-ci dans un carter de vilebrequin (8), dans lequel un carter d'huile (10) disposé en dessous du vilebrequin (6) est prévu pour recueillir une huile et dans lequel un séparateur d'huile de culasse est prévu au-dessus dudit au moins un piston (4) dans une culasse, **CARACTÉRISÉ EN CE QUE** le séparateur d'huile de culasse est conçu selon l'une des revendications précédentes.
